# EUROPÄISCHE PATENTSCHRIFT

(11) **EP 0 735 077 B1**
(45) Veröffentlichungstag und Bekanntmachung des Hinweises auf die Patenterteilung: **29.07.1998**
(21) Anmeldenummer: 96104388.2
(22) Anmeldetag: 20.03.1996
(51) Int. Cl.: C08J 3/205, C08L 51/04, B29C 47/40, B29C 47/76

(54) **Verfahren zur Herstellung von Thermoplasten**
Process for producing thermoplastic resin
Procédé de préparation de thermoplastes

(30) Priorität: 27.03.1995 DE 19511139; 21.12.1995 DE 19547975
(43) Veröffentlichungstag der Anmeldung: 02.10.1996
(73) Patentinhaber: BASF Aktiengesellschaft, 67063 Ludwigshafen (DE)
(72) Erfinder: Güntherberg, Norbert, Dr., 67346 Speyer (DE); Hofmann, Jürgen, 67069 Ludwigshafen (DE); Mailahn, Elmar, 67547 Worms (DE); Ohlig, Hilmar, 67657 Kaiserslautern (DE)

(56) Entgegenhaltungen:
- EP-A- 0 233 371
- EP-A- 0 734 825
- EP-A- 0 734 826
- EP-A- 0 735 078
- JP-A- 4 008 754
- US-A- 4 802 769
- PATENT ABSTRACTS OF JAPAN vol. 009, no. 160 (C-289), 4.Juli 1985 & JP-A-60 036502 (DENKI KAGAKU KOGYO KK), 25.Februar 1985,
- PATENT ABSTRACTS OF JAPAN vol. 007, no. 011 (C-145), 18.Januar 1983 & JP-A-57 167303 (TOSHIBA KIKAI KK), 15.Oktober 1982,
- PATENT ABSTRACTS OF JAPAN vol. 017, no. 142 (C-1038), 23.März 1993 & JP-A-04 311704 (ASAHI CHEM IND CO LTD), 4.November 1992,
- PATENT ABSTRACTS OF JAPAN vol. 015, no. 053 (M-1079), 7.Februar 1991 & JP-A-02 286208 (TOSHIBA MACH CO LTD), 26.November 1990,
- PATENT ABSTRACTS OF JAPAN vol. 013, no. 500 (M-891), 10.November 1989 & JP-A-01 202406 (TOSHIBA MACH CO LTD;OTHERS: 01), 15.August 1989,
- PATENT ABSTRACTS OF JAPAN vol. 016, no. 411 (C-0979), 31.August 1992 & JP-A-04 139202 (MITSUBISHI RAYON CO LTD;OTHERS: 01), 13.Mai 1992,
- PATENT ABSTRACTS OF JAPAN vol. 013, no. 367 (C-626), 15.August 1989 & JP-A-01 123852 (MITSUBISHI RAYON CO LTD), 16.Mai 1989,
- PATENT ABSTRACTS OF JAPAN vol. 13, no. 367 (C-626), 15.August 1989 & JP-A-01 123853 (MITSUBISHI RAYON CO LTD), 16.Mai 1989,

## Beschreibung

Die vorliegende Erfindung betrifft ein neues Verfahren zur Herstellung von schlagzäh modifizierten Thermoplasten durch mechanische Entwässerung einer wasserfeuchten, bis zu 50 Gew.-% Restwasser enthaltenden Elastomerkomponente A und das Vermischen der entwässerten Elastomerkomponente A' mit einem thermoplastischen Polymeren B in einer Schneckenmaschine.

Außerdem betrifft die Erfindung spezielle Ausführungsformen des genannten Verfahrens, auch solche unter Verwendung bestimmter Komponenten A und B, sowie nach dem Verfahren hergestellte Formmassen und die Verwendung der Formmassen zur Herstellung von Folien, Fasern und Formkörpern.

Die parallelen Europäischen Patentanmeldungen 735 078, 734 826 und 734 825 beschreiben ähnliche Verfahren, die sich jedoch hinsichtlich der Konfiguration bzw. der Betriebsweise der Schneckenmaschine vom Verfahren dieser Anmeldung unterscheiden.

Als Elastomerkomponenten für die Schlagzähmodifizierung von thermoplastischen oder anderen Kunststoffen werden häufig partikelförmige Kautschuke verwendet, die gepfropft oder ungepfropft sein können. Solche Kautschuke werden üblicherweise in wäßrigen Systemen hergestellt, beispielsweise durch Emulsionsoder Suspensionspolymerisation. Die bei der Suspensionspolymerisation entstandenen bzw. bei der Emulsionspolymerisation durch Zugabe eines koagulierenden Fällmittels ausgefällten Partikel werden in der Regel mit Wasser gewaschen und durch ein geeignetes Entwässerungsverfahren weiter entwässert.

Solche Verfahren sind beispielsweise die partielle chemische Trocknung mittels eines Strom- oder Wirbelbett-Trockners, eine Sprühtrocknung, sowie eine mechanische Entwässerung mittels Filtration (auch unter Vakuum), Dekantieren oder Zentifugieren. Man erhält in jedem Falle teilentwässerte Produkte.

Häufig verwendete Pfropfkautschuke sind beispielsweise mit einem Styrol-Acrylnitril-Copolymeren (SAN) gepfropftes Polybutadien und mit einem solchen Copolymeren gepfropftes Poly-n-butylacrylat, oder aus mehreren Pfropfstufen aufgebaute Kautschuke auf Basis von Butadien, Styrol, n-Butylacrylat, Methylmethacrylat und/oder Acrylnitril. Auch Kautschuke für andere Einsatzzwecke werden oft durch Polymerisation in wäßriger Phase erhalten.

Der Restwassergehalt des nach der Teilentwässerung erhaltenen Kautschuks beträgt bis zu 50 Gew.-% und wird üblicherweise durch energieaufwendiges Trocknen entfernt. Der als Pulver anfallende, getrocknete Kautschuk wird schließlich in den als Pulver oder Granulat vorliegenden Thermoplasten unter Aufschmelzen eingearbeitet, wobei das Endprodukt entsteht. Das Kautschukpulver neigt während des Trocknens und der Einarbeitung in den Thermoplasten wegen des Feinstaubanteils zur Selbstentzündung.

Nach einem in DE-A-20 37 784 beschriebenen Vorschlag kann man teilentwässerten Pfropfkautschuk in eine SAN-Schmelze unter Verdampfen des Wassers eintragen und einen diesen Pfropfkautschuk enthaltenden Thermoplasten erhalten. Dieses Verfahren erfordert einen relativ hohen Aufwand an elektrischer Energie.

Die EP-A 534 235 lehrt ein Verfahren zur Herstellung von schlagzäh modifizierten Thermoplasten durch Einarbeitung von mechanisch teilweise entwässertem Kautschuk in einen Thermoplasten oberhalb des Erweichungspunktes des Thermoplasten, wobei die Einarbeitung in einem Hauptextruder geschieht und die Teilentwässerung des Kautschuks in einem seitlich am Hauptextruder angebrachten sog. Seitenextruder vorgenommen wird. Das im Kautschuk verbliebene Restwasser wird während der Einarbeitung durch vor und nach der Einmischstelle befindliche Entgasungsöffnungen als Dampf entfernt.

Nachteilig an diesem Verfahren ist die Notwendigkeit, zur Herstellung des schlagzähen Thermoplasten zwei Extruder betreiben zu müssen. Außerdem ist die Entwässerung des Kautschuks im Seitenextruder nicht vollständig, so daß eine große Menge Wasser im Hauptextruder verdampft werden muß.

Die US-Patentschrift 5 151 026 beschreibt einen Extruder, in dem zerkleinerte und gewaschene Kunststoffabfälle, deren Wasseranteil bis zu 50 Gew.-% beträgt, entwässert werden. Zu diesem Zweck befinden sich in der Extruderschnecke, die ansonsten wie üblich ein Rechtsgewinde aufweist, kurze Abschnitte mit einem Linksgewinde. Die aus dieser US-Schrift hervorgegangene Teilanmeldung US 5 232 649 beschreibt das entsprechende Verfahren.

Die japanische Schrift JP 22 86 208 lehrt einen Zweischneckenextruder für die Entwässerung thermoplastischer Formmassen, dessen Rechtsgewinde-Schnecken jeweils zwei Linksgewinde-Abschnitte aufweisen. Das Wasser tritt flüssig durch sog. Seihergehäuse - siebartige Einsätze im Extrudergehäuse - und als Dampf durch Entgasungsöffnungen aus. Die Seihergehäuse neigen allerdings zu Verstopfungen durch austretendes Polymermaterial, wie es beispielsweise in der Schrift DT 1579106 für die Entwässerung von Synthesekautschuk beschrieben ist.

In der Schrift JP 1-202 406 ist ein Verfahren offenbart, bei dem feuchte, kautschukartige Polymere in einem Extruder zunächst in einem mit Seihergehäusen versehenen Bereich teilentwässert werden, und dann das restliche Wasser in einer atmosphärischen und drei sich daran anschließenden Vakuum-Entgasungszonen entfernt wird. Dieses Verfahren beinhaltet neben den anfälligen Seihergehäusen noch einen aufwendigen Vakuum-Entgasungsbereich.

Die US-Patentschrift 4 802 769 beschreibt einen Extruder, in dem eine wässrige Suspension ("slurry") eines Kautschuk-Polymeren, sowie ein Styrol-Acrylnitril-Copolymer zu einem Thermoplasten verarbeitet werden. Dabei tritt das Wasser durch Seihergehäuse flüssig und durch eine dreistufige Entgasung als Dampf aus. Als Nachteile sind - neben den verstopfenden Seihergehäusen - zu nennen, daß der mit Seihergehäusen versehene Extruderteil beheizt ist, und daß im Entgasungsteil ein mehrfacher Druckaufbau durch Stauelemente erfolgt, wodurch das Polymermaterial thermisch und mechanisch stark beansprucht wird.

Die Schrift JP-A 4 008 754 lehrt die Herstellung eines Polymeren in einem Extruder, wobei ein Pfropfpolymer - Latex im Extruder über Seihergehäuse und Entgasungsvorrichtungen entwässert, und mit der Schmelze eines Vinylpolymeren vermischt wird.

Der Erfindung lag die Aufgabe zugrunde, ein Verfahren bereitzustellen, welches die geschilderten Nachteile nicht aufweist. Insbesondere sollte ein Verfahren geschaffen werden, das die Herstellung eines schlagzähen Thermoplasten aus einer wasserfeuchten Elastomerkomponente und einem thermoplastischen, spröden Polymeren auf technisch einfache Weise, möglichst in einem Verfahrensschritt, ermöglicht.

Demgemäß wurde das eingangs definierte Verfahren gefunden, wobei man die Elastomerkomponente A einem Zweischneckenextruder mit gleichsinnig rotierenden, jeweils dreigängigen Schnecken zuführt, der in Förderrichtung im wesentlichen aus
- einem unbeheizten Dosierabschnitt, in den mittels einer Dosiereinrichtung Elastomerkomponente A dem Extruder zugeführt wird,
- mindestens einem der Entwässerung dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden, wobei die Entwässerungsöffnungen mit jeweils einer Rückhalteschnecke versehen sind, und wobei in mindestens einem der Abquetschabschnitte des Extruders mindestens eine zugehörige Entwässerungsöffnung unter Überdruck betrieben wird,
- mindestens einem Abschnitt, in dem das thermoplastische Polymere B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone
aufgebaut ist, und wobei das aus den Entwässerungsöffnungen austretende Wasser teilweise oder vollständig in flüssiger Phase vorliegt.

Außerdem wurden besondere Ausführungsformen des Verfahrens hinsichtlich der Ausgestaltung des Extruders und der verwendeten Komponenten A und B, die nach den Verfahren hergestellten thermoplastischen Formmassen sowie die Verwendung dieser Formmassen zur Herstellung von Folien, Fasern und Formkörpern gefunden.

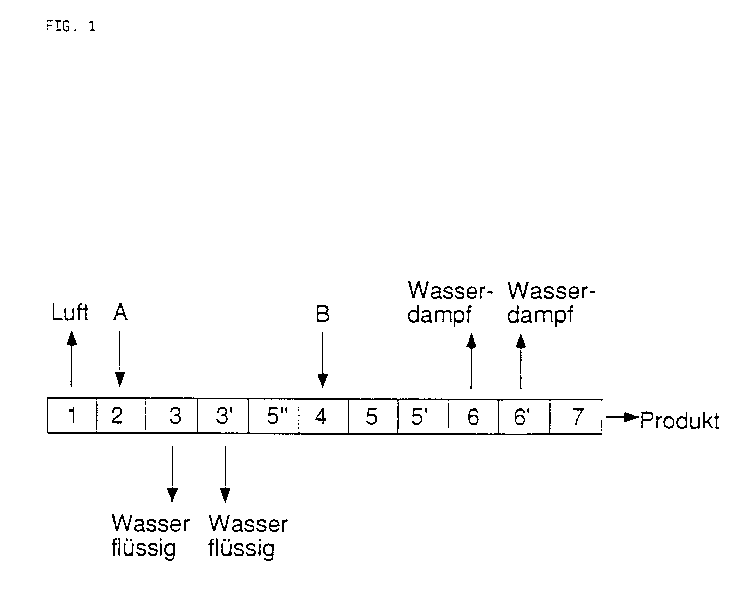

Nachfolgend seien das Verfahrensprinzip und die bevorzugten Ausführungsformen des Verfahrens beschrieben, wobei die als Abschnitte bzw. Zonen bezeichneten Bestandteile des Extruders nicht notwendigerweise identisch sind mit den einzelnen Bauteilen wie Gehäuseteilen, Schneckensegmenten, aus denen der Extruder montiert ist. Ein Abschnitt bzw. eine Zone besteht in der Regel aus mehreren Bauteilen. Die bei den Abschnitten bzw. Zonen genannten Ziffern beziehen sich auf Fig. 1.

Die wasserfeuchte, bis zu 50 Gew.-% Restwasser enthaltende Elastomerkomponente A, beispielsweise ein durch Ausfällen eines durch Emulsionspolymerisation gewonnener und auf bis zu 50 Gew.-% Restwassergehalt, teilentwässerter Pfropfkautschuk - wobei die Teilentwässerung z.B. durch thermische Trocknung, Dekantieren oder Zentrifugieren erfolgen kann -, wird dem Dosierabschnitt 2 des Extruders zugeführt, wobei der Dosierabschnitt üblicherweise aus einer automatisch arbeitenden Dosiereinrichtung und der eigentlichen Dosieröffnung besteht. Die Dosiereinrichtung ist beispielsweise als Förderschnecke ausgebildet, die das Fördergut in die Dosieröffnung fördert oder drückt. Mittels einer geeigneten Schneckengeometrie im Dosierabschnitt wird erreicht, daß die Komponente A eingezogen und entlüftet wird. Wahlweise kann eingeschlossene Luft auch durch einen Entlüftungsabschnitt 1 entweichen, der sich stromaufwärts entgegen der Förderrichtung des Extruders befindet und typischerweise eine oder mehrere Entlüftungsöffnungen aufweist.

Die wasserfeuchte Elastomerkomponente wird stromabwärts in den ersten Abquetschabschnitt gefördert.

Im ersten Abquetschabschnitt 3 wird ein erheblicher Teil des in der Elastomerkomponente enthaltenen Restwassers mechanisch entfernt. Das Material wird gegen ein als Hindernis wirkendes Stauelement gefördert, welches sich in der Regel am Ende des Abquetschabschnitts befindet. Hierdurch wird ein Druck aufgebaut, der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen.

Grundsätzlich können die verschiedensten Elemente, die einen Druckaufbau bewirken, verwendet werden. Sie bilden eine sog. "Stauzone", und sind als handelsübliche Bauteile dem Fachmann bekannt.

Beispielsweise können Schneckenelemente mit sehr geringer Steigung in Förderrichtung, Knetblöcke mit breiten, nichtfördernden Knetscheiben, Knetblöcke, deren Knetscheiben derart versetzt angeordnet sind, daß eine Steigung entgegen der Förderrichtung resultiert, oder Schneckenelemente mit einer Steigung entgegen der Förderrichtung, verwendet werden. Es können auch zwei oder mehrere der Stauelemente miteinander kombiniert werden. Gleichfalls kann die Stauwirkung durch die Länge der einzelnen Stauelemente dem jeweiligen Elastomeren angepaßt werden.

Bevorzugt enthält der Abquetschabschnitt 3 als Stauelemente Schneckenelemente mit einer Steigung entgegen der Förderrichtung, oder Knetblöcke mit einer resultierenden Steigung entgegen der Förderrichtung, oder eine Kombination dieser beiden Stauelemente.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Das im Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck oder Überdruck stehenden Entwässerungsöffnungen versehen. Sie befinden sich bevorzugt etwa in der Mitte des Abquetschabschnittes und in der Regel an der Oberseite des Extruders. Weiterhin sind die Entwässerungsöffnungen mit einer Vorrichtung versehen, die das Austreten des geförderten, zumeist unter Druck stehenden Elastomeren A verhindern. Dazu werden sog. Rückhalteschnecken verwendet.

Die Temperatur des austretenden Wassers beträgt im allgemeinen 20 bis 50°C und bevorzugt 25 bis 40°C, gemessen an der Austrittsöffnung.

Im ersten Abquetschabschnitt werden, abhängig von der Elastomerkomponente und dem anfangs vorhandenen Restwassergehalt, üblicherweise 5 bis 90, bevorzugt 5 bis 80 Gew.-% des anfänglich enthaltenen Restwassers entfernt.

Ist die Elastomerkomponente ein partikelförmiger Kautschuk, so liegt er nach Passieren der ersten Stauzone in der Regel ganz überwiegend pulverförmig vor.

Die partiell entwässerte Elastomerkomponente A wird über die Stauzonen hinweggefördert und gelangt in den nächsten Extruderabschnitt.

In einer bevorzugten Ausführungsform folgt auf den soeben beschriebenen ersten Abquetschabschnitt 3 ein zweiter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3.

Im zweiten Abquetschabschnitt wird die Elastomerkomponente weiter entwässert, wobei nochmals bis zu 80, bevorzugt 5 bis 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Das in diesem Abschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, daß der Anteil des flüssig austretenden Wassers trotz der hohen Materialtemperatur 70 Gew.-% oder mehr beträgt. Hierzu werden die Geometrien der Extruderschnecken und der Rückhalteschnecken derart gestaltet, daß durch Druckaufbau im Austrittsbereich das Wasser überwiegend flüssig bleibt.

In der Regel liegt die Wassertemperatur an der Austrittsöffnung bei 40 bis 130, bevorzugt bei 50 bis 99°C.

Es wird in mindestens einem der Abquetschabschnitte mindestens eine zugehörige Entwässerungsöffnung unter Überdruck betrieben. Bevorzugt werden die Entwässerungsöffnungen des zweiten Abquetschabschnittes 3' und diejenigen der nachfolgenden Abquetschabschnitte - so vorhanden - unter Überdruck betrieben. Üblicherweise wird ein Absolutdruck von bis zu 20 bar eingestellt. Der äußere Druck kann beispielsweise durch einen speziellen Entgasungsdom, versehen mit Wasserableitung und -ausschleusung und Druckhalteventil, oder eine dichtkämmende gegenläufige Rückhalteschnecke erzeugt werden.

Die teilentwässerte Elastomerkomponente kann am Ende des zweiten Abquetschabschnittes 3' bereits in größerem Umfange angeschmolzen oder aufgeschmolzen sein und in Form größerer zusammengeschmolzener Agglomerate vorliegen.

Der Extruder kann hinter dem zweiten Abquetschabschnitt 3' weitere Abquetschabschnitte enthalten, insbesondere dann, wenn der anfängliche Restwassergehalt der Elastomerkomponente A hoch ist.

Nach Passieren des letzten Abquetschabschnittes ist die Elastomerkomponente vom Großteil des Restwassers befreit (Komponente A') und gelangt in einen Abschnitt 4, in dem sich eine oder mehrere Zufuhröffnungen für das thermoplastische Polymere B befinden. Vorteilhaft ist, daß das Polymere B in Form seiner Schmelze zugeführt wird.

Die Zufuhr der Schmelze des Polymeren B kann mittels eines Extruders, bevorzugt jedoch mittels technisch einfacher Fördereinrichtungen wie Schmelzepumpen oder Dosierschnecken erfolgen.

Im Bereich des Abschnittes 4, in dem die Schmelze des thermoplastischen Polymeren B zugeführt wird, ist die Schnecke zweckmäßigerweise als Förderschnecke ausgebildet, welche die Mischung aus Elastomerkomponente A und der Schmelze des Thermoplasten B nur in geringem Ausmaß zu homogenisieren vermag.

An den die Thermoplastschmelze B zuführenden Abschnitt schließt sich ein Abschnitt 5 an, der mit Durchmischungs-, Knet- und/oder anderen Plastifizierungselementen versehen ist ("Plastifizierungsabschnitt").

Die Plastifizierungselemente homogenisieren die Polymerenmischung unter gleichzeitigem Aufschmelzen der entwässerten Elastomerkomponente A', wobei die zur Plastifizierung erforderliche Wärmeenergie durch Friktion der Polymermischung an den Plastifizierungselementen eingebracht wird.

Als Plastifizierungselemente kommen die dem Fachmann geläufigen Bauteile in Betracht, beispielsweise Schneckenelemente mit geringer Steigung in Förderrichtung, Knetblöcke mit schmalen oder breiten, fördernden oder nicht fördernden Knetscheiben, Schneckenelemente mit einer Steigung entgegen der Förderrichtung, oder eine Kombination solcher Elemente. Die Auswahl der Plastifizierungselemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann nach dem beschriebenen Plastifizierungsabschnitt einen oder mehrere weitere Plastifizierungsabschnitte 5' enthalten, wenn die Homogenisierung und das Aufschmelzen der Mischung im ersten Plastifizierungsabschnitt nicht vollständig war bzw. nur unter sehr intensiver Knetung und damit verbundener thermischer Schädigung des Polymermaterials aufgrund der erheblichen Reibungswärme hätte erfolgen können.

Für den bzw. die weiteren Plastifizierungsabschnitte gelten die Ausführungen zum ersten Plastifizierungsabschnitt entsprechend.

In einer bevorzugten Ausführungsform wird die Schmelze der thermoplastischen Polymeren B dem Extruder am Anfang des Plastifizierungsabschnittes zugeführt. Bei dieser Ausführungsform fällt demnach der Abschnitt der Thermoplastzufuhr 4 mit dem Anfang des Plastifizierungsabschnittes 5 zusammen.

In einer weiteren besonderen Ausführungsform des Extruders befindet sich ein oder mehrere weitere Plastifizierungsabschnitte vor dem Abschnitt 4, in dem die Schmelze des thermoplastischen Polymeren zugeführt wird, also hinter dem letzten Abquetschabschnitt. In diesem Plastifizierungsabschnitt 5" wird die weitestgehend entwässerte Elastomerkomponente A', beispielsweise das Kautschukpulver, zunächst allein homogenisiert und plastifiziert.

Die Schmelze des thermoplastischen Polymeren B wird demnach bei dieser Ausführungsform in eine viskose "Schmelze" der Elastomerkomponente A' eingebracht. In diesem Fall dient der der Zumischung von Schmelze B (Abschnitt 4) nachfolgende Plastifizierungsabschnitt 5 lediglich der Homogenisierung des Gemisches der beiden bereits im plastischen Zustand vorliegenden Komponenten und enthält daher in der Regel weniger Durchmischungselemente als die bisher beschriebenen Plastifizierungsabschnitte.

Welche der beschriebenen Varianten der Zufuhr von Schmelze B, nämlich
- in einen fördernden Abschnitt vor dem Plastifizierungsabschnitt,
- am Anfang des Plastifizierungsabschnittes,
- in einen fördernden Abschnitt zwischen zwei Plastifizierungsabschnitten,

gewählt wird, hängt von der physikalischen und chemischen Eigenschaften der zu vermischenden Komponenten ab. Nur beispielhaft seien die Viskositäten der Schmelzen von Elastomerkomponente A' und thermoplastischem Polymeren B, die Erweichungstemperaturen der Komponenten, ihre thermische Belastbarkeit bzw. Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B, und, im Falle eines partikelförmigen Kautschuks als Elastomerkomponente A, dessen Teilchengröße und Teilchengrößenverteilung genannt.

Dem letzten Plastifizierungsabschnitt folgen ein oder mehrere Entgasungsabschnitte 6 bzw. 6', die jeweils mit einer oder mehreren Entgasungsöffnungen versehen sind. In den Entgasungsabschnitten wird das verbliebene Restwasser, welches in den Abquetschabschnitten noch nicht mechanisch entfernt wurde, teilweise oder vollständig entfernt. Wegen der üblicherweise über 100°C liegenden Temperaturen der Polymerschmelze tritt das Wasser zumeist vollständig als Dampf aus. Die zur Verdampfung des Wassers notwendige Energie wurde bereits in den Plastifizierungsabschnitten eingebracht.

Die Entgasungsöffnungen befinden sich bevorzugt an der Oberseite des Extruders. Jedoch sind auch seitliche oder andere Anordnungen möglich.

Die Entgasungsöffnungen können unter Normaldruck, unter Vakuum oder unter Überdruck betrieben werden, wobei alle Entgasungsöffnungen gleichen oder unterschiedlichen Druck aufweisen können. Im Falle eines Vakuums beträgt der Absolutdruck üblicherweise 100 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck zu betreiben.

Die Anzahl der Entgasungsabschnitte sowie die Zahl, Anordnung und Dimensionierung der Entgasungsöffnungen richtet sich nach dem Wassergehalt des in die Entgasungsabschnitte eintretenden Polymeren und dem gewünschten Wasseranteil im Endprodukt. In einer bevorzugten Ausführungsform wird ein Extruder mit zwei Entgasungsabschnitten verwendet.

Die Entgasungsöffnungen der Entgasungsabschnitte können mit Vorrichtungen, z.B. Rückhalteschnecken, versehen sein, die ein Austreten des geförderten Materials durch die Öffnungen aus dem Extruder verhindern.

Nachdem eine erhebliche Menge des in der Elastomerkomponente A enthaltenen Restwassers bereits in den Abquetschabschnitten 3 und 3' entfernt wurde, werden in allen Entgasungsabschnitten 6 und 6' zusammengenommen nur etwa 10 bis 60, bevorzugt 20 bis 50 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet.

Der letzte Abschnitt des Extruders ist die Austragzone 7. Sie besteht aus einer Förderschnecke und einem geschlossenen Gehäuseteil, das mit einer definierten Austragsöffnung abgeschlossen ist. Bevorzugt wird als Austragsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird von rotierenden Messern abgetrennt und in Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das enstehende Granulat wird danach weiter gekühlt oder kühlt bei der Weiterverarbeitung ab, sofern dies notwendig ist. Es ist auch die Weiterverarbeitung im heißen Zustand denkbar.

Der Wassergehalt des ausgetragenen Polymeren (die "Strangfeuchte") beträgt in der Regel 0,1 bis 1,2 Gew.-%, bezogen auf dieses Polymere. Die Temperatur der aus der Austragsöffnung austretenden Polymerschmelze beträgt in der Regel 180 bis 350°C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß die einzelnen Abschnitte des Extruders verschieden lang sein können.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines weiten Bereiches variieren kann. Nur beispielhaft sei eine Drehzahl der Extruderschnecken im Bereich von 100 bis 350 min⁻¹ genannt.

Es ist vorteilhaft, den Extruder derart auszugestalten und zu betreiben, daß sich bei einer Schneckendrehzahl von 100 bis 350 min⁻¹ mittlere Schergeschwindigkeiten von 180 bis 220 s⁻¹ einstellen. Jedoch kann es je nach Art, Menge und Eigenschaften der verwendeten Komponenten zweckmäßig sein, bei mittleren Schergeschwindigkeiten außerhalb dieses Bereiches zu arbeiten.

Als Elastomerkomponente A kann jedes Polymere eingesetzt werden, das elastomere Eigenschaften hat und einem Extruder zugeführt werden kann. Insbesondere werden, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Styrol, Alkylstyrol, C₁-bis C₁₀-Alkylester der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden. Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/ Acrylnitril, n-Butylacrylat/Styrol/Methylmethacrylat, Butadien/ Styrol/Acrylnitril/Methylmethacrylat und Butadien/n-Butylacrylat/ Methylmethacrylat/Styrol/Acrylnitril.

In dieser Ausführungsform werden als thermoplastische Polymere B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Weiterhin können als thermoplastische Polymere B auch Polycarbonat, Polybutylenterephthalat, Polyoxymethylen, Polymethylmethacrylat, Polyphenylensulfid, Polysulfone, Polyethersulfone und Polyamide und Mischungen dieser Thermoplasten eingesetzt werden.

Ebenso kann man als Komponente B Copolymere auf Basis von Styrol/ Maleinsäureanhydrid, Styrol/imidiertem Maleinsäureanhydrid, Styrol/Maleinsäureanhydrid/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/ imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol oder kernalkylierte Styrole ersetzt sein.

Von den zuletzt genannten Polymeren B sind solche auf Basis von α-Methylstyrol/Acrylnitril, Styrol/Maleinsäureanhydrid, Styrol/ Methylmethacrylat und Copolymere mit imidiertem Maleinsäureanhydrid bevorzugt.

Bekannte Beispiele für die Elastomerkomponente A sind Polymerisate von konjugierten Dienen wie Butadien, mit einer äußeren Pfropfhülle auf Basis einer vinylaromatischen Verbindung, z.B. SAN-Copolymeren. Gleichfalls bekannt sind Pfropfkautschuke auf Basis von vernetzten Polymerisaten aus C₁- bis C₁₀-Alkylestern der Acrylsäure wie n-Butylacrylat oder Ethylhexylacrylat, gepfropft mit Polymeren auf der Grundlage vinylaromatischer Verbindungen wie SAN-Copolymeren. Gebräuchlich sind auch Pfropfkautschuke, die im wesentlichen ein Copolymerisat aus konjugierten Dienen und C₁-bis C₁₀-Alkylacrylaten, beispielsweise ein Butadien-n-Butylacrylat-Copolymerisat, und eine äußere Pfropfstufe aus SAN-Copolymer oder PMMA enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der Wasserphase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 ff beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 50 Gew.-% Restwassergehalt auf Basis von Polydienen und/oder Polyalkylacrylaten sowie SAN und/oder PMMA eingesetzt, die aus mehr als zwei Pfropfstufen aufgebaut sind. Beispiele für solche vielstufigen Pfropfpartikel sind Teilchen, die als Kern ein Polydien und/oder Polyalkylacrylat, als erste Hülle ein SAN-Polymeres und als zweite Hülle ein anderes SAN-Polymeres mit einem veränderten Gewichtsverhältnis Styrol : Acrylnitril aufgebaut sind, oder auch Teilchen, enthaltend einen Kern aus Polystyrol oder SAN-Polymer, eine erste Hülle aus Polydien und/oder Polyalkylacrylat und eine zweite Hülle aus SAN-Polymer. Weitere Beispiele sind Pfropfkautschuke aus einem Polydienkern, einer oder mehreren Polyalkylacrylathüllen und einer oder mehreren SAN-Polymer-Hüllen oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder andere dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 µm. Handelt es sich um die allgemein bekannten Pfropfkautschuke kleinen Durchmessers, so beträgt er bevorzugt 0,08 bis 1,5 und besonders bevorzugt 0,1 bis 0,8 µm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 µm. Derartige Pfropfkautschuke großen Durchmessers lehrt beispielsweise die DE-OS 44 43 886.

Bevorzugte Komponente B sind auch in dieser Ausführungsform die genannten SAN-Copolymere und/oder PMMA.

Neben der Elastomerkomponente A und dem thermoplastischen Polymeren B können die nach dem erfindungsgemäßen Verfahren hergestellten Formmassen noch weitere Komponenten, insbesondere Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten.

Diese weiteren Komponenten können direkt durch Zufuhröffnungen oder zusammen mit der Elastomerkomponente A und dem thermoplastischen Polymeren B in den Extruder eingeführt werden.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil des erfindungsgemäßen Verfahrens ist, daß ein erheblicher Teil des Restwassers, welches in der teilentwässerten Elastomerkomponente A enthalten ist, bereits in den Abquetschzonen mechanisch entfernt wird, weshalb in den nachfolgenden Extruderabschnitten weniger thermische Energie zur Verdampfung des verbliebenen Wassers angewendet werden muß. Es resultiert eine deutliche Energieeinsparung.

Ein weiterer Vorteil des erfindungsgemäßen Verfahrens liegt darin, daß der Extruder bei niedrigen Temperaturen betrieben werden kann als beispielsweise gemäß dem in der EP-A 534 235 beschriebenen Verfahren, so daß die Elastomerkomponente A und das aus den Bestandteilen A und B - und gegebenenfalls den weiteren Komponenten - bestehende Polymere schonender verarbeitet wird.

Durch das Einarbeiten einer teilentwässerten Elastomerkomponente A in die Schmelze eines thermoplastischen Polymeren B lassen sich Verträglichkeit oder zumindest Teilverträglichkeit der Elastomerkomponente mit dem thermoplastischen Polymeren und ausreichende thermische Beständigkeit vorausgesetzt, kautschukmodifizierte thermoplastische Formmassen verschiedenster Art herstellen.

Gegenüber den aus dem Stand der Technik bekannten Verfahren hat das erfindungsgemäße Verfahren weiterhin den Vorteil, daß keine verstopfungsanfälligen Seihergehäuse verwendet werden.

Die erfindungsgemäße Anordnung des Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sog. "Schüssen", verfügbar und ermöglichen eine genaue Anpassung des Extruders an das spezielle Konfektionierungsproblem.

### Beispiele

### a) Extruder

Es wird ein Zweischneckenextruder des Typs ZSK 53 von Fa. Werner und Pfleiderer, Stuttgart, eingesetzt, der aus 14 Schüssen aufgebaut ist. Ihre Anordnung ist stromab wie folgt (in Klammern ist die in der Beschreibung verwendete Bezeichnung der Extruderabschnitte angegeben):
- Schuß 0:: Länge 3 D, unbeheizt, mit obenliegender Entlüftungsöffnung
(Entlüftungsabschnitt 1).
- Schuß 1:: Länge 3 D, unbeheizt, mit oberliegender Dosieröffnung, die mit einer Dosiereinrichtung ESB 45 von Fa. Werner und Pfleiderer versehen ist
(Dosierabschnitt 2 für Elastomerkomponente A).
- Schuß 2:: Länge 3 D, unbeheizt, mit obenliegender Entwässerungsöffnung, die mit einer Rückhalteschnecke versehen ist
(erster Abquetschabschnitt 3, vorderer Teil).
- Schuß 3:: Länge 3 D, unbeheizt, ohne Öffnungen, enthält Stauelemente
(erster Abquetschabschnitt 3, hinterer Teil).
- Schuß 4:: Länge 3 D, unbeheizt, ohne Öffnungen, mit fördernder Schnecke
(zweiter Abquetschabschnitt 3', vorderer Teil).
- Schuß 5:: Länge 3 D, unbeheizt, mit obenliegender Entwässerungsöffnung, die mit einem Entgasungsdom, Rückhalteschnecke der zugehörigen Wasserableitung und Druckhalteventil versehen ist
(zweiter Abquetschabschnitt 3', mittlerer Teil).
- Schuß 6:: Länge 3 D, unbeheizt, ohne Öffnungen, enthält Stauelemente
(zweiter Abquetschabschnitt 3', hinterer Teil).
- Schuß 7:: Länge 3 D, beheizt auf 240°C, ohne Öffnungen, mit fördernder Schnecke
(Abschnitt 4, in dem die Schmelze des thermoplastischen Polymeren B zugeführt wird, vorderer Teil).
- Schuß 8:: Länge 3 D, beheizt auf 240°C, mit seitlicher Öffnung, durch die mittels einer Rohrleitung via Schmelzepumpe die Polymerschmelze eingebracht wird
(Abschnitt 4, in dem die Schmelze des thermoplastischen Polymeren B zugeführt wird, hinterer Teil) und einen Schneckenabschnitt, der Knetblöcke enthält (erster Plastifizierungsabschnitt 5).
- Schuß 9:: Länge 3 D, beheizt auf 240°C, ohne Öffnungen, mit einem Schneckenabschnitt, der Knetblöcke enthält
(zweiter Plastifizierungsabschnitt 5').
- Schuß 10:: Länge 3 D, beheizt auf 240°C, mit obenliegender, mit einer Rückhalteschnecke versehenen Entgasungsöffnung und Förderschnecke, wird unter Normaldruck betrieben
(erster Entgasungsabschnitt 6).
- Schuß 11:: Länge 3 D, beheizt auf 240°C, ohne Öffnungen, mit Förderschnecke
(zweiter Entgasungsabschnitt 6', vorderer Teil).
- Schuß 12:: Länge 3 D, beheizt auf 240°C, mit obenliegender Entgasungsöffnung und Förderschnecke, wird unter Normaldruck betrieben
(zweiter Entgasungsabschnitt 6', hinterer Teil).
- Schuß 13:: Länge 3 D, beheizt auf 240°C, ohne Öffnungen und mit Förderschnecke
(Austragzone 7, vorderer Teil).
- Abschluß:: Düsenleiste mit zylindrischen Bohrungen
(Austragszone 7, hinterer Teil).

Der Schneckendurchmesser beträgt D = 53 mm und die Schnecke ist dreigängig ausgeführt. "Schnecke" bezeichnet jeweils die Doppelschnecke, also beide Schnecken.

### b) verwendete Polymerkomponenten

Als Elastomerkomponente A wurden die folgenden Pfropfkautschuke eingesetzt:
- A-1:: Pfropfkautschuk Typ Polybutadien (Kern)/Styrol-Acrylnitril (Schale).
Butadien wurde in Emulsion polymerisiert, der erhaltene Latex agglomeriert, wobei ein Latex mit einer mittleren Teilchengröße d₅₀ von 238 nm entstand, und anschließend mit einem Gemisch von Styrol und Acrylnitril pfropfpolymerisiert. Näheres ist der DE-AS 24 27 960, Sp. 6, Z. 17 bis Sp. 7, Z. 27, zu entnehmen, wobei das ausgefällte Pfropfpolymerisat jedoch zunächst abdekantiert (nicht abgesaugt) und anschließend mittels eines Stromtrockners bis auf einen Restwassergehalt von 19 Gew.-% teilentwässert wurde.
- A-2:: Pfropfkautschuk Typ Polybutylacrylat (Kern)/Styrol-Acrylnitril (Schale)
n-Butylacrylat wurde mit Dihydrodicyclopentadienylacrylat als Vernetzer in Emulsion polymerisiert und der erhaltene Latex, dessen mittlere Teilchengröße d₅₀ 230 nm betrug, mit einem Styrol-Acrylnitril-Gemisch pfropfpolymerisiert. Im Einzelnen wurde gemäß der in der DE-AS 12 60 135, Sp. 4, Z. 65 bis Sp. 5, Z. 18, angegebenen Vorschrift verfahren, wobei das ausgefällte Pfropfprodukt im Luftstrom partiell getrocknet wurde. Der Restwassergehalt betrug 28 Gew.-%.

Als thermoplastisches Polymeres B wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Verlag München 1969, Seite 122 bis 124, beschrieben ist. Es wurden zwei Polymere B-1 bzw. B-2 mit verschiedenen Polymerisationsgraden hergestellt. Die Viskositätszahl VZ (ermittelt nach DIN 53 726 bei 25°C, 0,5 Gew.-% in Dimethylformamid) betrug 60 ml/g für das Polymere B-1 und 90 ml/g für das Polymere B-2.

Das SAN-Copolymere wurde dem Extruder als Schmelze zugeführt.

Aus den Komponenten A-1 und B entstehen Formmassen, die allgemein als ABS (Acrylnitril/Butadien/Styrol) bekannt sind. Die aus den Komponenten A-2 und B erhaltenen Produkte sind als ASA-Formmassen (Arcylnitril/Styrol/Acrylester) geläufig.

### c) Messungen

Einer der Pfropfkautschuke A und eines der Polymere B wurden dem Extruder zugeführt. Gemessen wurden der Wasseraustrag und der Kautschukaustrag in der ersten und zweiten Abquetschzone sowie die Strangfeuchte des austretenden Endproduktes. Diese Messungen wurden gravimetrisch vorgenommen.

Weiterhin wurde die Temperatur des in den Abquetschzonen austretenden Wassers auf übliche Weise gemessen. Die als Dampf ausgetretene Wassermenge wurde durch Differenzbildung des anfänglichen Restwassergehaltes und der Summe des ausgetretenen flüssigen Wassers berechnet.

Aus den Austrägen an Wasser, Dampf und Kautschuk in kg/h wurden Prozentanteile berechnet. Die angegebenen %-Werte sind Gew.-% und beziehen sich für Wasser und Dampf auf den Wassergehalt des dem Extruder zugeführten Kautschuks (mit ∗ markierte Zeile), der gleich 100 gesetzt wurde, und für Kautschuk auf den Durchsatz des feuchten Kautschuks (mit ∗∗ markierte Zeile), der gleich 100 gesetzt wurde. Die Strangfeuchte ist auf das erhaltene Endprodukt bezogen.

**Tabelle**

| Beispiel | 1 | 2 |
|---|---|---|
| Elastomerkomponente | A-1 | A-2 |
| thermoplastisches Polymeres | B-1 | B-1 |
| Durchsatz Kautschuk [kg/h]** | 50 | 80 |
| Zufuhr Schmelze thermopl. Polymer [kg/h] | 90 | 80 |
| Wassergehalt Kautschuk [Gew.-%]* | 19 | 28 |
| Extruder-Drehzahl [min⁻¹] | 300 | 300 |

| 1. Abquetschabschnitt | | |
|---|---|---|
| Austrag Wasser [kg/h] ¹⁾ | 0,6=6% | 13,2=59% |
| Austrag Kautschuk [kg/h] ²⁾ | 0,3=<1% | 2,5=3% |
| Temperatur Wasser [°C] | 39 | 30 |

| 2. Abquetschabschnitt | | |
|---|---|---|
| Austrag Wasser [kg/h] ¹⁾ | 5,0=53% | 3,1=14% |
| Austrag Kautschuk [kg/h] ²⁾ | 0,5=1% | 0,2=<1% |
| Temperatur Wasser [°C] | 97 | 98 |
| Entgasungsabschnitte | | |
| Dampfaustrag [kg/h] ¹⁾ | 3,9=41% | 6,0=27% |
| Strangfeuchte [Gew.-%] | 0,2 | 0,3 |

| | | |
|---|---|---|
| ¹⁾ %-Werte bezogen auf Zeile * = 100 | | |
| ²⁾ %-Werte bezogen auf Zeile **= 100 | | |

Die Beispiele zeigen, daß 6 bis 59 Gew.-% des anfänglich im teilentwässerten Kautschuk enthaltenen Restwassers bereits im ersten Abquetschabschnitt und 14 bis 53 Gew.-% im zweiten Abquetschabschnitt als flüssiges Wasser entfernt werden. Lediglich 27 bis 41 Gew.-%, also der kleinere Teil des Restwassers, werden in den Entgasungsabschnitten als Dampf ausgetragen.

Der Kautschukaustrag ist mit maximal 3 Gew.-% der Menge feuchten Kautschuks im ersten und maximal 1 Gew.-% im zweiten Abquetschabschnitt gering.

## Patentansprüche

1. Verfahren zur Herstellung von schlagzäh modifizierten Thermoplasten durch mechanische Entwässerung einer wasserfeuchten, bis zu 50 Gew.-% Restwasser enthaltenden Elastomerkomponente A und Vermischen der so erhaltenen entwässerten Elastomerkomponente A' mit einem thermoplastischen Polymeren B in einer Schneckenmaschine, dadurch gekennzeichnet, daß man die Elastomerkomponente A einem Zweischneckenextruder mit gleichsinnig rotierenden, jeweils dreigängigen Schnecken zuführt, der in Förderrichtung im wesentlichen aus
- einem unbeheizten Dosierabschnitt, in den mittels einer Dosiereinrichtung die Elastomerkomponente A dem Extruder zugeführt wird,
- mindestens einem der Entwässerung dienenden unbeheizten Abquetschabschnitt, der mindestens ein Stauelement, sowie jeweils mindestens eine zugehörige Entwässerungsöffnung, enthält, wobei als Entwässerungsöffnungen keine Seihergehäuse verwendet werden, wobei die Entwässerungsöffnungen mit jeweils einer Rückhalteschnecke versehen sind, und wobei in mindestens einem der Abquetschabschnitte des Extruders mindestens eine zugehörige Entwässerungsöffnung unter Überdruck betrieben wird,
- mindestens einem Abschnitt, in dem das thermoplastische Polymer B als Schmelze in den Extruder eingeführt wird,
- mindestens einem mit Durchmischungs-, Knet- und/oder anderen Plastifizierungselementen versehenen Abschnitt,
- mindestens einem mit mindestens einer Entgasungsöffnung versehenen Entgasungsabschnitt, in dem das restliche Wasser als Dampf entfernt wird, und
- einer Austragszone
aufgebaut ist, und daß das aus den Entwässerungsöffnungen austretende Wasser teilweise oder vollständig in flüssiger Phase vorliegt.

2. Verfahren nach Anspruch 1, dadurch gekennzeichnet, daß die Austragszone durch einen Düsenkopf abgeschlossen ist.

3. Verfahren nach Anspruch 1 bis 2, dadurch gekennzeichnet, daß der Extruder in der Austragszone beheizt wird.

4. Verfahren nach Anspruch 1 bis 3, dadurch gekennzeichnet, daß der Extruder zwischen dem letzten Abquetschabschnitt und dem Abschnitt, in dem die Schmelze des thermoplastischen Polymeren B zugeführt wird, mindestens einem mit Durchmischungs-, Knet- und/oder anderen Plastifizierungselementen versehenen Abschnitt aufweist.

5. Verfahren nach Anspruch 1 bis 4, dadurch gekennzeichnet, daß der Extruder zwischen dem letzten Abquetschabschnitt und dem ersten Entgasungsabschnitt mindestens eine Zufuhröffnung für die Schmelze des thermoplastischen Polymeren B, sowie mindestens einen dieser Zufuhröffnung nachfolgenden und gegebenenfalls mindestens einen dieser Zufuhröffnung vorangehenden Durchmischungsabschnitt, aufweist.

6. Verfahren nach Anspruch 1 bis 5 dadurch gekennzeichnet, daß der Extruder bei einer Schneckendrehzahl von 100 bis 350 min⁻¹ und mittleren Schergeschwindigkeiten von 180 bis 220 s⁻¹ betrieben wird.

7. Verfahren nach Anspruch 1 bis 6, dadurch gekennzeichnet, daß als Elastomerkomponente A mindestens ein Pfropfkautschuk mit einem Restwassergehalt von bis zu 50 Gew.-% eingesetzt wird.

8. Verfahren nach Anspruch 1 bis 7, dadurch gekennzeichnet, daß als Elastomerkomponente A ein zwei- oder mehrstufig aufgebauter Pfropfkautschuk, enthaltend eine Grundstufe aus einem oder mehreren der Monomeren Butadien, Isopren, Styrol, Alkylstyrol, Alkylacrylat, Alkylmethacrylat und geringen Mengen anderer, auch vernetzender Monomerer und eine Pfropfstufe aus Styrol, Alkylstyrol, Acrylnitril, Methylmethacrylat oder Mischungen dieser Monomeren, verwendet wird, und als thermoplastisches Polymeres B ein Styrol-Acrylnitril-Copolymeres, Polystyrol, Polymethylmethacrylat, Polyvinylchlorid oder Mischungen dieser Polymeren, eingesetzt wird.

9. Verfahren nach Anspruch 1 bis 8, dadurch gekennzeichnet, daß als Elastomerkomponente A ein Pfropfkautschuk auf Basis von Polybutadien und/oder Polyalkylacrylat als Grundstufe und einem Copolymeren aus Styrol und Acrylnitril als Pfropfstufe, und als thermoplastisches Polymeres B ein Styrol-Acrylnitril-Copolymeres, eingesetzt wird.

10. Verfahren nach Anspruch 1 bis 9, dadurch gekennzeichnet, daß als Elastomerkomponente A ein zwei- oder mehrstufig aufgebauter Pfropfkautschuk eingesetzt wird, der im wesentlichen aus Polyalkylacrylat und einem Copolymeren aus Styrol und Acrylnitril besteht, und als thermoplastisches Polymeres B ein Styrol-Acrylnitril-Copolymeres, eingesetzt wird.

11. Verfahren nach Anspruch 1 bis 10, dadurch gekennzeichnet, daß der Pfropfkautschuk einen Durchmesser von 0,05 bis 20 µm hat.

## Claims

1. A process for the preparation of toughened thermoplastics by mechanically dewatering a water-moist elastomer component A containing up to 50% by weight of residual water and mixing the resulting dewatered elastomer component A' with a thermoplastic polymer B in an extruder, wherein the elastomer component A is fed to a twin-screw extruder which has corotating screws, each of which is triple-flight, and, in the conveying direction, essentially comprises
- an unheated metering section in which the elastomer component A is fed to the extruder by a metering means
- at least one unheated squeeze section which serves for dewatering and contains at least one retarding element and in each case at least one associated dewatering orifice, the dewatering orifices used not being Seiher barrels, the dewatering orifices each being provided with a retaining screw and at least one associated dewatering orifice being operated under superatmospheric pressure in at least one of the squeeze sections of the extruder
- at least one section in which the thermoplastic polymer B is introduced as a melt into the extruder,
- at least one section provided with mixing, kneading or other plasticating elements,
- at least one devolatilization section provided with at least one devolatilization orifice and in which the residual water is removed as steam and
- a discharge zone,
and wherein some or all of the water emerging from the dewatering orifices is in the liquid phase.

2. A process as claimed in claim 1, wherein the discharge zone is terminated by a die head.

3. A process as claimed in either of claims 1 and 2, wherein the extruder is heated in the discharge zone.

4. A process as claimed in any of claims 1 to 3, wherein the extruder has, between the last squeeze section and the section in which the melt of the thermoplastic polymer B is fed in, at least one section provided with mixing, kneading or other platicating elements.

5. A process as claimed in any of claims 1 to 4, wherein the extruder has, between the last squeeze section and the first devolatilization section, at least one feed orifice for the melt of the thermoplastic polymer B and at least one mixing section which is downstream of this feed orifice and, if required, at least one mixing section which is upstream of this feed orifice.

6. A process as claimed in any of claims 1 to 5, wherein the extruder is operated at a screw speed of from 100 to 350 min⁻¹ and mean shear rates of from 180 to 220 s⁻¹.

7. A process as claimed in any of claims 1 to 6, wherein at least one graft rubber having a residual water content of up to 50% by weight is used as elastomer component A.

8. A process as claimed in any of claims 1 to 7, wherein a graft rubber composed of two or more stages and containing a base stage comprising one or more of the monomers butadiene, isoprene, styrene, alkylstyrene, alkyl acrylate, alkyl methacrylate and small amounts of other monomers, including crosslinking monomers, and a graft stage comprising styrene, alkylstyrene, acrylonitrile, methyl methacrylate or a mixture of these monomers is used as elastomer component A, and a styrene/acrylonitrile copolymer, polystyrene, polymethyl methacrylate, polyvinyl chloride or a mixture of these polymers is used as thermoplastic polymer B.

9. A process as claimed in any of claims 1 to 8, wherein a graft rubber based on polybutadiene or polyalkyl acrylate as the base stage and a copolymer of styrene and acrylonitrile as the graft stage is used as elastomer component A, and a styrene/acrylonitrile copolymer is used as thermoplastic polymer B.

10. A process as claimed in any of claims 1 to 9, wherein a graft rubber which is composed of two or more stages and essentially comprises polyalkyl acrylate and a copolymer of styrene and acrylonitrile is used as elastomer component A, and a styrene/acrylonitrile copolymer is used as thermoplatic polymer B.

11. A process as claimed in any of claims 1 to 10, wherein the graft rubber has a diameter of from 0.05 to 20 µm.

## Revendications

1. Procédé de préparation de matières thermoplastiques modifiées de manière à les rendre résiliantes par l'égouttage ou la déshydratation d'un composant élastomérique A, humide d'eau, contenant jusqu'à 50% en poids d'eau résiduelle et mélange du composant élastomérique A' déshydraté ainsi obtenu avec un polymère thermoplastique B à l'aide d'une machine à vis, caractérisé en ce que l'on envoie le composant élastomérique A à une extrudeuse à deux vis comportant des vis tournant dans le même sens, à chaque fois à trois pas, qui, dans le sens de la progression, est essentiellement constituée
- d'une section de dosage non chauffée dans laquelle le composant élastomérique A est envoyé à l'extrudeuse à l'aide d'une installation de dosage,
- d'au moins une section d'exprimage non chauffée, servant à la déshydratation, qui comporte au moins un élément de barrage, ainsi qu'à chaque fois au moins une ouverture de déshydratation associée, où on n'utilise pas de boîtier ou carter filtrant à titre d'ouvertures de déshydratation, où les ouvertures de déshydratation sont à chaque fois pourvues d'une vis de retenue et où dans au moins l'une des sections d'exprimage de l'extrudeuse, on exploite au moins une ouverture de déshydratation associée en surpression,
- d'au moins une section dans laquelle le polymère thermoplastique B est introduit dans l'extrudeuse sous la forme de masse fondue,
- d'au moins une section pourvue d'éléments de mélange intime, de malaxage et/ou d'autres éléments de plastification,
- d'au moins une section de dégazage pourvue d'au moins une ouverture de dégazage, dans laquelle l'eau résiduelle est éliminée sous forme de vapeur, et
- d'une zone d'évacuation ou de sortie,
et en ce que l'eau sortant des ouvertures de déshydratation se présente partiellement ou totalement en phase liquide.

2. Procédé suivant la revendication 1, caractérisé en ce que la zone de sortie est fermée par une tête à ajutages.

3. Procédé suivant la revendication 1 ou 2, caractérisé en ce que l'extrudeuse est chauffée dans la zone de sortie.

4. Procédé suivant l'une quelconque des revendications 1 à 3, caractérisé en ce que l'extrudeuse présente au moins une section pourvue d'éléments de mélange intime, de malaxage et/ou d'autres éléments de plastification entre la dernière section d'exprimage et la section dans laquelle on envoie la masse fondue du polymère thermoplastique B.

5. Procédé suivant l'une quelconque des revendications 1 à 4, caractérisé en ce que l'extrudeuse présente, entre la dernière section d'exprimage et la première section de dégazage, au moins une ouverture d'alimentation pour la masse fondue du polymère thermoplastique B, ainsi qu'au moins une section de mélange intime faisant suite à cette ouverture d'alimentation et éventuellement au moins une section de mélange intime précédant cette ouverture d'alimentation.

6. Procédé suivant l'une quelconque des revendications 1 à 5, caractérisé en ce que l'on exploite l'extrudeuse à un nombre de tours des vis de 100 à 350 min⁻¹ et à des vitesses de cisaillement moyenne de 180 à 220 s⁻¹.

7. Procédé suivant l'une quelconque des revendications 1 à 6, caractérisé en ce qu'à titre de composant élastomérique A, on utilise au moins un caoutchouc de greffage avec une teneur en eau résiduelle allant jusqu'à 50% en poids.

8. Procédé suivant l'une quelconque des revendications 1 à 7, caractérisé en ce que l'on utilise, à titre de composant élastomérique A, un caoutchouc de greffage à constitution bi- à multiéchelonnée, contenant un échelon de base formé d'un ou plusieurs des monomères butadiène, isoprène, styrène, alkylstyrène, acrylate d'alkyle, méthacrylate d'alkyle et de quantités mineures d'autres monomères réticulants et d'un échelon de greffage constitué de styrène, d'alkylstyrène, d'acrylonitrile, de méthacrylate de méthyle ou de mélanges de ces monomères, et, à titre de polymère thermoplastique B, on met en oeuvre un copolymère de styrène-acrylonitrile, du polystyrène, du poly(méthacrylate de méthyle), du poly-(chlorure de vinyle) ou des mélanges de ces polymères.

9. Procédé suivant l'une quelconque des revendications 1 à 8, caractérisé en ce que, à titre de composant élastomérique A, on utilise un caoutchouc de greffage à base de polybutadiène et/ou de poly(acrylate d'alkyle) à titre d'échelon de base et un copolymère de styrène et d'acrylonitrile à titre d'échelon de greffage et, à titre de polymère thermoplastique B, un copolymère de styrène-acrylonitrile.

10. Procédé suivant l'une quelconque des revendications 1 à 9, caractérisé en ce que l'on utilise, à titre de composant élastomérique A, un caoutchouc de greffage de constitution bi- ou multiéchelonnée, qui se compose essentiellement de poly(acrylate d'alkyle) et d'un copolymère du styrène et de l'acrylonitrile, et, à titre de polymère thermoplastique B, un copolymère du styrène et de l'acrylonitrile.

11. Procédé suivant l'une quelconque des revendications 1 à 10, caractérisé en ce que le caoutchouc de greffage possède un diamètre de 0,05 à 20 µm.
